# EUROPEAN PATENT SPECIFICATION

(11) **EP 1 805 446 B1**
(45) Date of publication and mention of the grant of the patent: **05.12.2012**
(21) Application number: 05803848.0
(22) Date of filing: 27.10.2005
(51) Int. Cl.: F16L 23/028, F16L 23/032

(54) **PIPE JOINT**
ROHRVERBINDUNG
RACCORD DE CONDUITS

(30) Priority: 29.10.2004 FI 20041397
(43) Date of publication of application: 11.07.2007
(73) Proprietor: Maricap OY, 01450 Vantaa (FI)
(72) Inventor: SUNDHOLM, Göran, FI-04310 TUUSULA (FI)
(74) Representative: Laine, Terho Tapio
(86) International application number: PCT/FI2005/000463
(87) International publication number: WO 2006/045887

(56) References cited:
- EP-A- 0 292 754
- EP-A- 0 840 049
- EP-A1- 0 292 754
- GB-A- 1 296 700
- GB-A- 2 202 022
- US-A- 2 911 239
- US-A- 2 911 239
- US-A- 4 105 227
- US-A- 4 105 227
- US-A- 4 519 639

## Description

### Background of the invention

The present invention relates to a pipe joint as defined in the preamble of claim 1, consisting of the end portions of pipe sections to be joined together, said end portions having a collar formed by expanding each end portion radially outwardly, the collar protruding preferably perpendicularly, and flange portions which, as seen from the junction, are placed on different sides of the collars and tightened by means of applicable fastening elements, such as screws and nuts.

For butt connection of pipes, flange joints are generally used. For these it is required that the ends of both pipes to be joined are provided with a collar, typically e.g. a collar substantially perpendicular to the longitudinal axis of the pipe and receiving the flange part pressed against it. The collars of the pipe sections to be joined together remain between the flanges. The flanges are provided with holes through which tightening elements, such as screws or bolts, are arranged and the joint is tightened with nut elements. There are several alternatives for forming the collar. A typical method is described in US patent 4,905,492, wherein the collar is formed in two stages. The end of the pipe is at first expanded to an angle of about 35 - 40 degrees and then with a second expansion device to an angle of about 90 degrees relative to the longitudinal direction of the pipe. Behind the collars is arranged a flange, which are tightened with screws and nuts against each other. A flange joint of this type is disclosed in patent application publication GB 2202022 A. In this joint, flanges machined to a shape corresponding to the shape of the collar are used. In the joint, usually a sealing is used between the pipe ends placed opposite to each other. In particular, the solution according to publication GB 2202022 A presents a joint in which substantially perpendicular surfaces are used in the joint surfaces of the pipe sections, but in which the collar surface adjacent to the flange deviates from the plane perpendicular to the longitudinal axis of the pipe. The publication describes a shaped flange fitted to correspond to the back surface of the collar, i.e. to the surface facing away from the joint surface in the direction of the longitudinal axis of the pipe. Such a joint has the drawback that the flange parts have to be so formed that their shape on the side facing towards the collar corresponds to the shape of the collar. This requires either additional machining or that the flanges be made e.g. by forging. US 4105227 A discloses a flange joint between pipe lengths. US 2911239 A discloses a multiple piece pipe flange according to the preamble of claim 1 EP 0292754 A discloses a flange for fastening a pipe, for example an exhaust manifold. EP0840049 A discloses a collar sleeve with a limit surface, for a ring flange for a flanged pipe joint. US 4519639 A discloses a hinged flange for tail-pipes and the like.

A further problem is that the collar or the flange may undergo variations of shape, which may cause problems e.g. regarding the tightness of the joint.

The object of the present invention is to create a completely new type of solution for a pipe joint that will allow the problems of prior art to be avoided. Another object is to create a pipe joint whose flange parts adapt to variations of shape of the collar parts and, on the other hand, are suited for use with different collar shapes. Yet another object is to achieve an easy-to-assemble solution for a pipe joint.

### Brief description of the invention

The invention is based on a concept whereby the flange part adapts to the surface of the collar part when the joint is being tightened.

The pipe joint of the invention is characterized by claim 1.

The pipe joint of the invention is additionally characterized by what is stated in claims 2 - 11.

The solution of the invention has numerous significant advantages. By using an adaptable flange part of a joint according to the invention, a very versatile solution for forming a pipe joint is achieved. On the one hand, the flange part adapts for use with different collar parts. On the other hand, it adapts to different shape variations or malformations in connection with collars. By using a multi-element flange part, it is possible to consider flange thickness requirements while still achieving an adaptability of the flange part of the joint relative to the collar. By using a flange part formed from segments it is further possible to significantly improve and accelerate the assembly of a pipe joint. The joint can more easily be formed directly from the side. On the other hand, the segments can better adjust themselves against the collar. By using a spacer element between the flanges to be placed on different sides of the joint, it is possible to keep the flanges at a desired distance from each other during the assembly, thus facilitating the mounting work. By using a centering element, it is possible to achieve mutual centering of the pipe sections to be joined, which improves the quality of the joint and further facilitates the mounting work. By using a flexible sleeve element, a combined element that works both as a centering element and a spacer element is produced. By using multi-element flange parts attached together, advantages are achieved during the assembly and, on the other hand, the formation of the flange pack is facilitated. By implementing the joining using a binding agent, such as an elastic glue, e.g. silicone or the like, an advantageous and easy-to-use solution for forming the flange part pack is achieved. By using between the pipe sections to be joined a planar sealing with an adhesive surface on one side, allowing it to be attached to one of the pipe sections before the mounting, the mounting work can be further facilitated and accelerated. By using a compensating element, such as a flexible washer, a reliable structure is obtained for the tightening of the joint and, on the other hand, for compensation of an angular or planar difference between the tightening elements and flange parts.

### Brief description of the figures

In the following, the invention will be described in detail with reference to an example and the attached drawing, wherein
Fig. 1 presents a pipe joint according to the invention, partially sectioned before the tightening of the joint,
Fig. 2 presents a detail of the joint in Fig. 1,
Fig. 3 presents a pipe joint according to the invention partially sectioned after the tightening of the joint,
Fig. 4 presents a detail of the joint in Fig. 3,
Fig. 5 presents an embodiment of the pipe joint of the invention at the assembly stage,
Fig. 6 presents an embodiment of a pipe joint according to the invention at the assembly stage as seen from the direction of arrow A in Fig. 5,
Fig. 7 presents an embodiment of the pipe joint already mounted,
Fig. 8a presents an embodiment of the flange of the flange part,
Fig. 8b presents another embodiment the flange of the flange part,
Fig. 9 presents another embodiment of the flange part,
Fig. 10 presents yet another embodiment of the pipe joint of the invention as seen in the direction of the longitudinal axis of the pipe, and
Fig. 11 presents the embodiment in Fig. 10 in side view.

### Detailed description of the invention

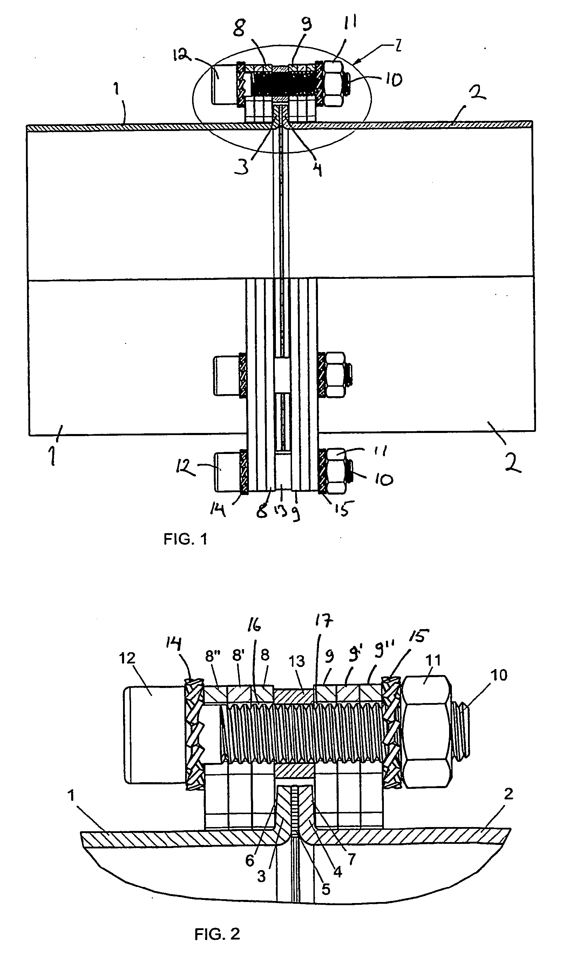

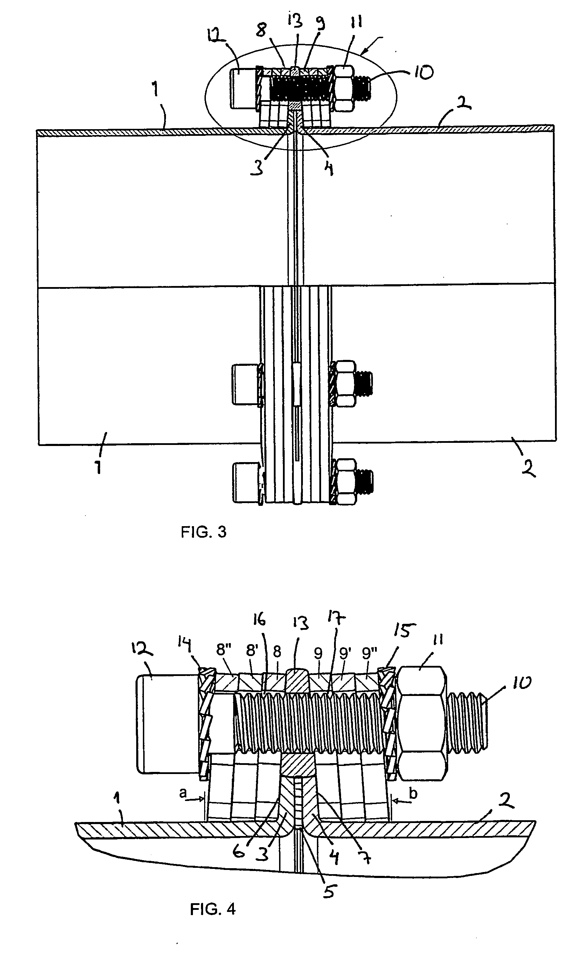

Figures 1 and 2 present a pipe joint according to the invention before the tightening of the joint. Figures 3 and 4 show the joint of Fig. 1 and 2 when tightened.

There are numerous ways of forming a collar at the end of a pipe section. Some of these are described in publication GB 2202022 A, among others. The figure shows a collar type in which the back surface of the collar, i.e. the surface against which the flange part will be placed, is somewhat slanting.

In the pipe joint, pipe sections 1 and 2 are joined together by means of a flange joint by pressing the pipe sections together end to end by collars 3, 4 formed at the ends of the pipe sections. Arranged between the joint surfaces of the collars is preferably a sealing element 5. The pipe sections 1, 2 are pressed against each other by means of flange parts 8, 9 on the side facing away from the joint surfaces of the collars, i.e. by the back surfaces 6, 7 of the collar. The flange parts are pressed against each other by means of tightening elements, such as screw elements 10 arranged through holes 16 formed through the flange elements and nut elements 11. The flange elements 8, 9 on different sides of the joint remain between the head 12 of the screw element and the nut element 11.

The pipe joint, which consists of the end portions of the pipe sections 1, 2 to be joined together, said end portions having a collar 3, 4 preferably protruding substantially perpendicularly and the flange parts 8, 9 placed on different sides of the collar relative to the junction and tightened by means of applicable fastening elements, such as screws 10, 12 and nuts 11. The flange part 8, 9 has been arranged to be adaptable against the shoulder of the collar 3, 4, most suitably against its back surface 6, 7, at least when the joint is being tightened. In the case of this figure, the adaptation is achieved via tilting the flange parts 8, 9 by the amount of angles α and β, but it may also comprise e.g. bending of the flange part. There may be one or more flange parts 8, 9 on different sides of the joint.

According to figures 1-4, the flange part 8, 9 consists of a number of flange elements 8, 8', 8"; 9, 9', 9". When a sufficient thickness of the flange part is required, a sufficient number of flange elements can be arranged side by side (as in figures 1 - 4), thus making it possible to preserve the adaptability of the flange part to the collar. In the embodiment illustrated in figures 1-4, three flange elements 8, 8', 8"; 9, 9', 9" are arranged on either side of the joint. When necessary, the joint thus comprises several flange elements 8, 8', 8"; 9, 9', 9" arranged side by side in the axial direction of the pipe section, said elements being arranged to be movable, preferably slidable, relative to each other at least when the joint is being tightened. The flange parts 8, 9 are provided with openings 16, 17 for tightening elements, such as e.g. screw elements 10, the opening being formed in shape or size so as to permit the motion, such as the angular change α, β, required for the adaptation of the flange part when the joint is being tightened.

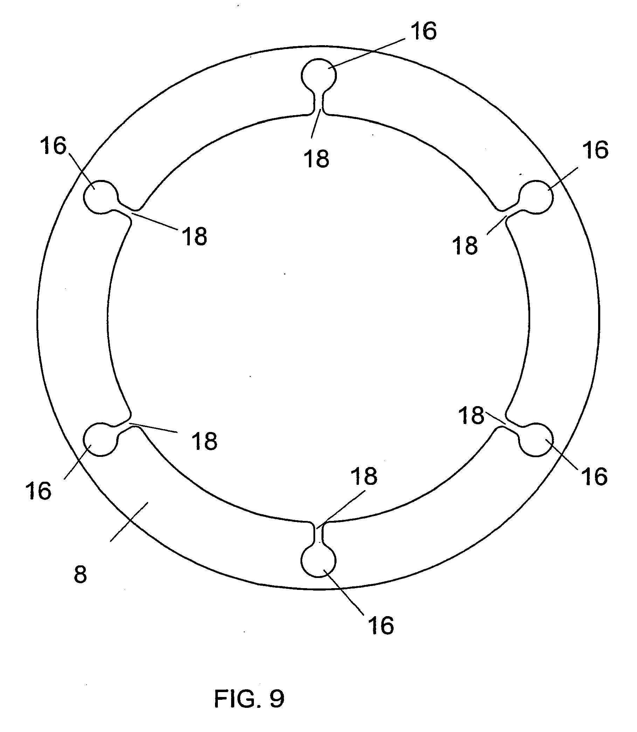

The flange part may be formed as a circular, preferably ring-like flange part, as in Fig. 9. In this case the flange part has to be placed on the pipe sections for formation of a joint, typically already before the collar is formed.

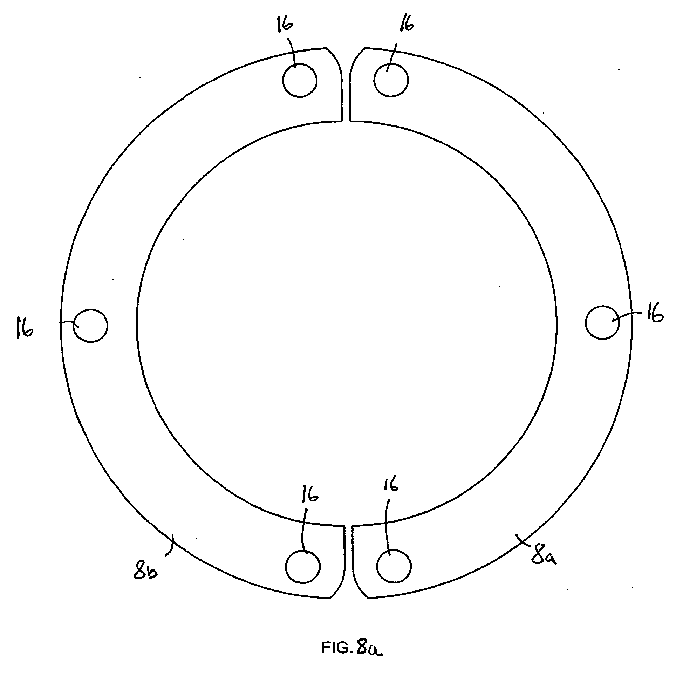

According to a preferred embodiment, the flange part 8, 9 is composed from segments 8a, 8b. Fig. 8a presents a flange part of this type. By using segments in the joint, a flange part is obtained that can be mounted in the joint even after the collar has been formed.

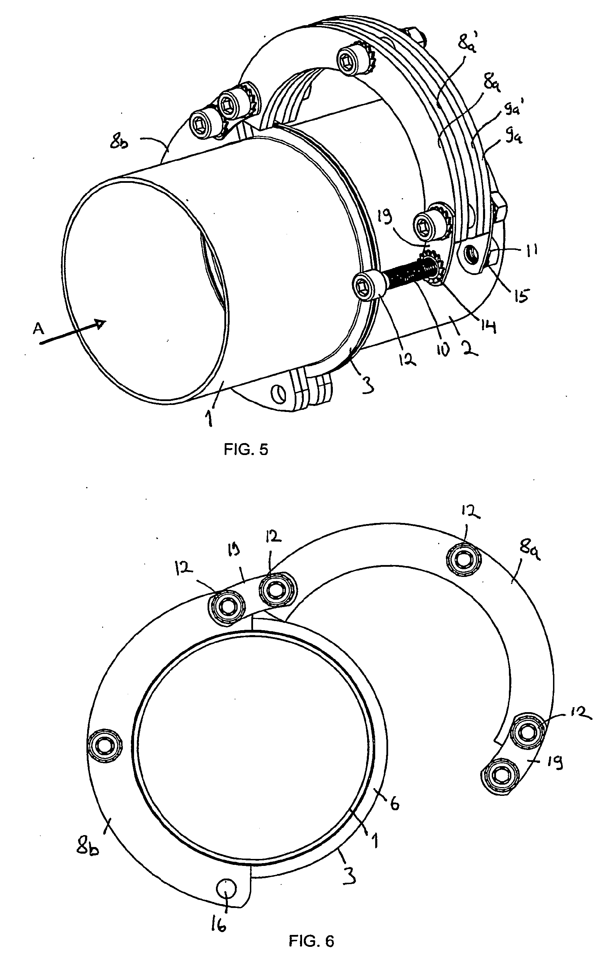

When a flange part formed from segments is used, the joint comprises at least two binder parts 19 connecting the segments 8a, 8b of the flange part to form a ring. Figures 5 and 6 illustrate the assembly of a joint formed from a number of segments.

Arranged between the flange parts 8, 9 on different sides of the collars 3, 4 of the joint is a spacer element 13, such as an elastic sleeve part or the like. The spacer element keeps the flange parts at a suitable distance from each other during assembly to facilitate the mounting work. In the embodiments according to the figure, the spacer element 13 is arranged in connection with a tightening element, such as the screw 10.

For the formation of the joint, the flange parts 8, 8', 9, 9' to be placed on different sides of the joint can be assembled as a complete package, wherein the screw 10 is arranged through the opening formed in the spacer element 13. The flange parts 8, 9 and the tightening elements 10, 11, 12 are arranged as a complete package, which can be mounted directly at the junction, as illustrated in figures 5 and 6.

Arranged between the flange part 8, 9 and the counter surface of the tightening element 11, 12 is a compensating element 14, 15, such as a washer flexible in the tightening direction. The compensating element 14, 15 compensates the difference of angle or plane between the tightening element and the flange part. This can be perceived e.g. in the embodiment in Fig. 4, where the compression of the washers 14, 15 is greater in the portion closer to the pipe element 1, 2.

The joint further comprises means 13 for centering the pipe sections 1, 2 to be joined together, at least at the junction, at least when the joint is being tightened. In the solution illustrated in the figures, the spacer element , 13 functions both as a spacer element and as a centering element. When the joint is being tightened, the sleeve element is compressed, with the result that it expands and is pressed against the pipe sections 1, 2, especially against the upper surface of the collar 3, 4. Thus, tightening the different tightening elements of the joint results in mutual centering of the pipe sections.

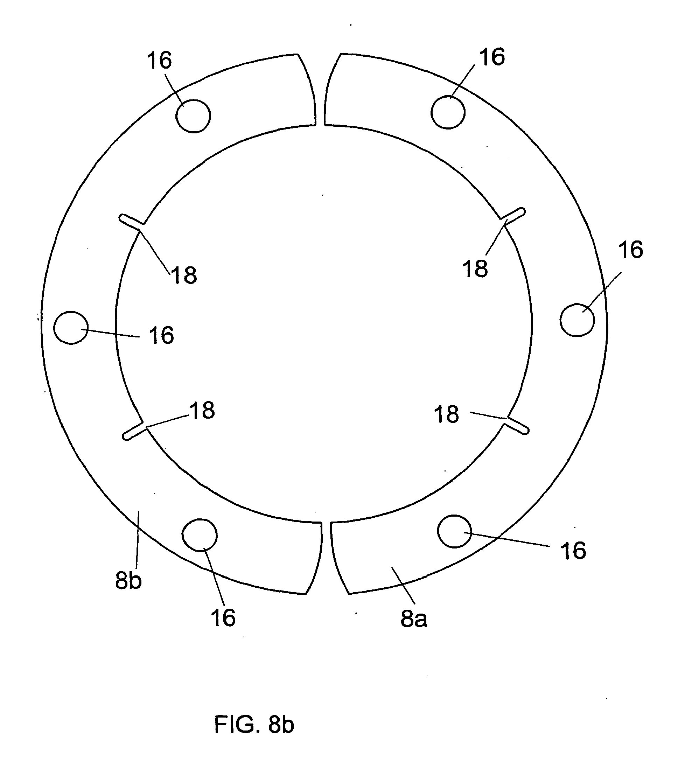

At least one of the flange parts 8, 8a, 8b is provided with slots 18, openings or equivalent easers, formed mainly to improve the adaptability. In Fig. 9, the flange part is provided with slots 18 between the holes 16 and the inner circle of the flange part. Naturally, slots may be also be arranged at other points in the flange part, and they need not be placed opposite to the screw holes 16 as in the embodiment in Fig. 9. Correspondingly, flange parts 8a, 8b consisting of segments can also be provided with slots, openings or equivalent. An embodiment of this type is presented in Fig. 8b.

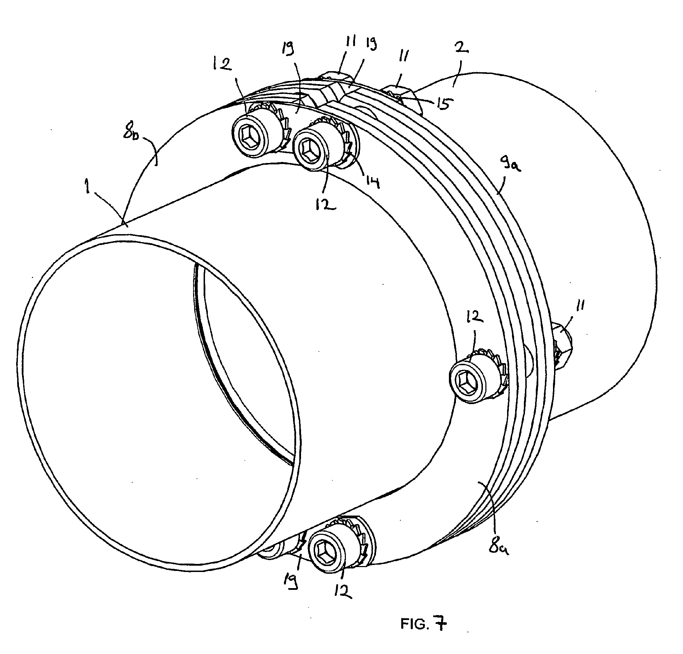

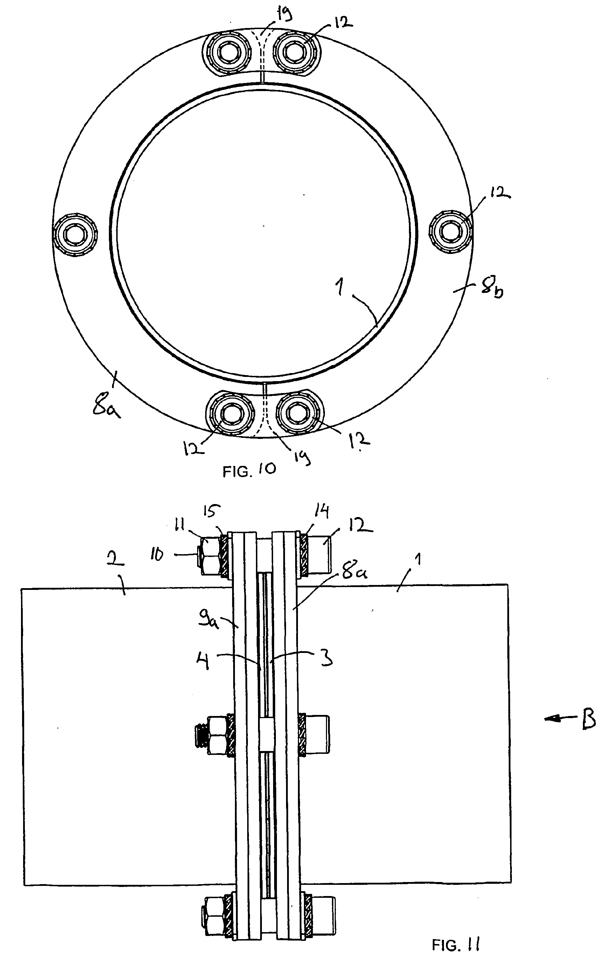

Figures 10 and 11 present yet another embodiment, in which the joint is implemented using flange parts formed from two segments 8a, 8b; 9a, 9b. In addition, two flange parts are provided on either side of the collar parts 3, 4 of the joint. For the sake of clarity, a corresponding joint is also presented in Fig. 7. Fig. 10 is the solution of Fig. 11 as seen from the direction of the arrow B.

According to a preferred embodiment, the flange elements 8, 8', 8"; 9, 9', 9" arranged side by side are attached to each other by adjacent side faces with an elastic adhesive, such as silicone. In tests it has been established that, regardless of the adhesive, motion of the flange elements relative to each other and adaptation of the flange part to the collar are achieved.

The flange parts, flange elements, segments of the invention can be advantageously produced e.g. by die-cutting or cutting, e.g. by a laser cutting technique, from a desired material that fulfills the requirements pertaining to the application, e.g. from metal plate.

According to an embodiment, the sealing element 5 arranged between the pipe sections 1, 2 to be joined together is a planar sealing 5 whose one side is provided with an adhesive so as to allow it to be easily fastened to one of the pipe sections before the assembly.

It is obvious to the person skilled in the art that the invention is not limited to the embodiments described above, but that it may be varied within the scope of the claims below.

## Claims

1. A pipe joint, consisting of the end portions of pipe sections (1, 2) to be joined together, said end portions having a collar (3, 4) formed by expanding each end portion radially outwardly, the collar preferably protruding substantially perpendicularly, and of flange parts (8, 9) placed on different sides of the collars relative to the junction and tightened by means of applicable fastening elements, such as screws (10) and nuts (11), whereby the flange part (8, 9) is arranged to be adaptable against the shoulder of the collar (3, 4), most suitably against its back surface (6, 7), at least when the joint is being tightened, **characterized in that** each flange part (8, 9) is a ring-like flange part composed from a plurality of flange elements (8, 8', 8"; 9, 9', 9") arranged side by side in the axial direction of the pipe section and placed on the pipe section for formation of a joint before the collar (3, 4) is formed, said flange elements being arranged to be movable relative to each other to permit a motion and angular change (α, β), required for adaptation of the flange parts (8,9) against the back surface (6, 7) of the collar (3,4) at least when the joint is being tightened,
or
each flange part (8, 9) is composed from a plurality of segments (8a, 8b; 9a, 9b) and at least two binder parts (19) connecting the segments (8a, 8b; 9a, 9b) to form a ring-like flange part and is formed from the plurality of flange segments (8a, 8b; 8a', 8b', 9a, 9b; 9a', 9b') arranged side by side in the axial direction of the pipe sections (1,2), so that said flange part (8,9) composed from the plurality of segments can be mounted in the joint even after the collar (3,4) has been formed,
said flange parts (8,9) being arranged to be movable relative to each other to permit a motion and angular change (α, β), required for adaptation of the flange parts (8,9) against the back surface (6, 7) of the collar, at least when the joint is being tightened.

2. A pipe joint according to claim 1, **characterized in that** the flange part (8, 9) is composed from a plurality of flange elements (8, 8', 8"; 9, 9', 9"), said elements being arranged to be slidable relative to each other at least when the joint is being tightened.

3. A pipe joint according to claim 1 or 2, **characterized in that** it comprises a spacer element (13), such as an elastic sleeve part or the like, arranged between the flange parts (8, 9) on different sides of the junction.

4. A pipe joint according to any one of claims 1 - 3, **characterized in that** it comprises a compensating element (14, 15), such as a washer flexible in the tightening direction, arranged between the flange part and the counter surface of the tightening element.

5. A pipe joint according to claim 3, **characterized in that** the spacer element (13) is arranged in connection with a tightening element, such as a screw (10).

6. A pipe joint according to any one of claims 1-5, **charac-terized** in that the joint comprises means (13) for centering the pipe sections (1, 2) to be joined together, at least at the junction, at least when the joint is being tightened.

7. A pipe joint according to any one of claims 1-6, **characterized in that** at least one of the flange parts (8, 8a, 8b) is provided with slots (18), openings or equivalent easers, formed mainly to improve the adaptability.

8. A pipe joint according to any one of claims 1-7, **characterized in that** the flange parts (8, 9) and the tightening means (10, 11, 12) have been arranged as a complete package that can be mounted directly on the joint

9. A pipe joint according to any one of claims 1-8, **characterized in that** the flange parts (8, 9) are provided with openings (16, 17) for tightening elements, such as e.g. screw elements (10), the opening being formed in shape or size so as to permit the motion, such as the angular change (α, β), required for the adaptation of the flange part when the joint is being tightened.

10. A pipe joint according to any one of claims 1 - 9, **characterized in that** the flange elements (8, 8', 8"; 9, 9', 9") arranged side by side are attached to each other by adjacent side faces with an elastic adhesive, such as silicone.

11. A pipe joint according to any one of claims 1 - 10, **characterized in that** a planar sealing (5) is arranged between the pipe sections (1, 2) to be joined together, one side of the sealing being provided with an adhesive so as to allow it to be easily fastened to one of the pipe sections before the assembly.

## Patentansprüche

1. Rohrverbindung, bestehend aus den Endabschnitten von Rohrstücken (1, 2), die miteinander zu verbinden sind, wobei die Endabschnitte einen Kragen (3, 4) aufweisen, der durch Aufweitung jedes Endabschnitts radial nach außen gebildet ist, wobei der Kragen vorzugsweise im Wesentlichen senkrecht vorragt, und aus Flanschteilen (8, 9), die auf verschiedenen Seiten der Kragen in Bezug auf die Verbindung positioniert und mittels anwendbarer Befestigungselemente, wie beispielsweise Schrauben (10) und Muttern (11), festgezogen werden, wodurch das Flanschteil (8, 9) gegen die Schulter des Kragens (3, 4), am geeignetsten gegen seine Rückseite (6, 7), anpassbar angeordnet wird, wenigstens wenn die Verbindung festgezogen wird, **dadurch gekennzeichnet, dass** jedes Flanschteil (8, 9) ein ringförmiges Flanschteil ist, das sich aus mehreren Flanschelementen (8, 8', 8" ; 9, 9', 9") zusammensetzt, die Seite an Seite in der Axialrichtung des Rohrabschnitts angeordnet sind und auf dem Rohrabschnitt zur Bildung einer Verbindung platziert werden, bevor der Kragen (3, 4) gebildet wird, wobei die Flanschelemente in Bezug aufeinander bewegbar angeordnet sind, um eine Bewegung und Winkeländerung (α, β) zuzulassen, die zur Anpassung der Flanschteile (8, 9) gegen die Rückseite (6, 7) des Kragens (3, 4) erforderlich sind, wenigstens wenn die Verbindung festgezogen wird,
oder
jedes Flanschteil (8, 9) aus mehreren Segmenten (8a, 8b; 9a, 9b) und wenigstens zwei Verbinderteilen (19) zusammengesetzt ist, die die Segmente (8a, 8b; 9a, 9b) verbinden, um ein ringförmiges Flanschteil zu bilden, und aus den mehreren Flanschsegmenten (8a, 8b; 8a', 8b'; 9a, 9b; 9a', 9b') , die Seite an Seite in der Axialrichtung der Rohrstücke (1, 2) angeordnet sind, derart ausgebildet ist, dass das aus den mehreren Segmenten zusammengesetzte Flanschteil (8, 9) in der Verbindung montiert werden kann, selbst nachdem der Kragen (3, 4) gebildet worden ist,
wobei die Flanschteile (8, 9) in Bezug aufeinander bewegbar eingerichtet sind, um eine Bewegung und Winkeländerung (α, β) zuzulassen, die zur Anpassung der Flanschteile (8, 9) gegen die Rückseite (6, 7) des Kragens erforderlich sind, wenigstens wenn die Verbindung festgezogen wird.

2. Rohrverbindung nach Anspruch 1, **dadurch gekennzeichnet, dass** das Flanschteil (8, 9) aus mehreren Flanschelementen (8, 8' , 8" ; 9, 9', 9") zusammengesetzt ist, wobei die Elemente in Bezug aufeinander verschiebbar angeordnet sind, wenigstens wenn die Verbindung festgezogen wird.

3. Rohrverbindung nach Anspruch 1 oder 2, **dadurch gekennzeichnet, dass** sie ein Abstandshalterelement (13), wie beispielsweise ein elastisches Hülsenteil oder dergleichen, aufweist, das zwischen den Flanschteilen (8, 9) auf verschiedenen Seiten der Verbindung angeordnet ist.

4. Rohrverbindung nach einem beliebigen einzelnen der Ansprüche 1-3, **dadurch gekennzeichnet, dass** sie ein Ausgleichselement (14, 15), wie beispielsweise eine in der Festziehrichtung elastische Unterlegscheibe, aufweist, das zwischen dem Flanschteil und der Gegenfläche des Festziehelementes angeordnet ist.

5. Rohrverbindung nach Anspruch 3, **dadurch gekennzeichnet, dass** das Abstandshalterelement (13) in Verbindung mit einem Festziehelement, wie beispielsweise einer Schraube (10), angeordnet ist.

6. Rohrverbindung nach einem beliebigen der Ansprüche 1-5, **dadurch gekennzeichnet, dass** die Verbindung Mittel (13) zur Zentrierung der miteinander zu verbindenden Rohrstöcke (1, 2), wenigstens an der Verbindung, wenigstens wenn die Verbindung festgezogen wird, aufweist.

7. Rohrverbindung nach einem beliebigen der Ansprüche 1-6, **dadurch gekennzeichnet, dass** wenigstens eines der Flanschteile (8, 8a, 8b) mit Schlitzen (18), Öffnungen oder äquivalenten Erleichterungen versehen ist, die hauptsächlich gebildet sind, um die Anpassbarkeit zu verbessern.

8. Rohrverbindung nach einem beliebigen der Ansprüche 1-7, **dadurch gekennzeichnet, dass** die Flanschteile (8, 9) und die Festziehmittel (10, 11, 12) als eine vollständige Packung eingerichtet worden sind, die unmittelbar an der Verbindung montiert werden kann.

9. Rohrverbindung nach einem beliebigen der Ansprüche 1-8, **dadurch gekennzeichnet, dass** die Flanschteile (8, 9) mit Öffnungen (16, 17) für Festziehelemente, wie z.B. Schraubenelemente (10), versehen sind, wobei die Öffnung hinsichtlich der Form oder Größe ausgebildet ist, um die Bewegung, wie beispielsweise die Winkeländerung (α, β), zuzulassen, die für die Anpassung des Flanschteils erforderlich ist, wenn die Verbindung festgezogen wird.

10. Rohrverbindung nach einem beliebigen der Ansprüche 1-9, **dadurch gekennzeichnet, dass** die Seite an Seite angeordneten Flanschelemente (8, 8', 8" ; 9, 9', 9") an benachbarten Seitenflächen mit einem elastischen Klebstoff, wie beispielsweise Silikon, aneinander befestigt sind.

11. Rohrverbindung nach einem beliebigen der Ansprüche 1-10, **dadurch gekennzeichnet, dass** eine flache Dichtung (5) zwischen den miteinander zu verbindenden Rohrstücken (1, 2) angeordnet ist, wobei eine Seite der Dichtung mit einem Klebstoff versehen ist, um ihr so zu ermöglichen, vor der Montage leicht an einem der Rohrstücke fixiert zu werden.

## Revendications

1. Raccord de conduit se composant des parties d'extrémité des sections de conduit (1, 2) à assembler, lesdites parties d'extrémité ayant un collier (3, 4) formé en expansant chaque partie d'extrémité radialement vers l'extérieur, le collier faisant de préférence saillie de manière sensiblement perpendiculaire, et de parties de bride (8, 9) placées sur différents côtés du collier par rapport à la jonction et serrées au moyen d'éléments de fixation applicables, tels que des vis (10) et des écrous (11), moyennant quoi la partie de bride (8, 9) est agencée pour pouvoir être adaptable contre l'épaulement du collier (3, 4), de manière préférée entre toutes contre sa surface arrière (6, 7), au moins lorsque le raccord est serré, **caractérisé en ce que** chaque partie de bride (8, 9) est une partie de bride de forme annulaire composée à partir d'une pluralité d'éléments de bride (8, 8', 8" ; 9, 9', 9") agencés côte à côte dans la direction axiale de la section de conduit et placés sur la section de conduit pour la formation d'un raccord avant que le collier (3, 4) ne soit formé, lesdits éléments de bride étant agencés pour être mobiles l'un par rapport à l'autre afin de permettre un mouvement et un changement angulaire (α, β), nécessaires pour l'application des parties de bride (8, 9) contre la surface arrière (6, 7) du collier (3, 4), au moins lorsque le raccord est serré,
ou bien chaque partie de bride (8, 9) est composée d'une pluralité de segments (8a, 8b ; 9a, 9b) et d'au moins deux parties formant liants (19) raccordant les segments (8a, 8b ; 9a, 9b) afin de former une partie de bride de forme annulaire et est formée à partir de la pluralité de segments de bride (8a, 8b ; 8a', 8b', 9a, 9b ; 9a', 9b') agencés côte à côte dans la direction axiale des sections de bride (1, 2) de sorte que ladite partie de bride (8, 9) composée à partir de la pluralité de segments peut être montée dans le raccord même après que le collier (3, 4) a été formé,
lesdites parties de bride (8, 9) étant agencées pour être mobiles les unes par rapport aux autres afin de permettre un mouvement et un changement angulaire (α, β) nécessaires pour l'adaptation des parties de bride (8, 9) contre la surface arrière (6, 7) du collier, au moins lorsque le raccord est serré.

2. Raccord de conduit selon la revendication 1, **caractérisé en ce que** la partie de bride (8, 9) est composée d'une pluralité d'éléments de bride (8, 8', 8" ; 9, 9', 9") , lesdits éléments étant agencés pour pouvoir coulisser les uns par rapport aux autres au moins lorsque le raccord est serré.

3. Raccord de conduit selon la revendication 1 ou 2, **caractérisé en ce qu'**il comprend un élément d'espacement (13), tel qu'une partie de manchon élastique ou similaire, agencé entre les parties de bride (8, 9) sur les différents côtés de la jonction.

4. Raccord de conduit selon l'une quelconque des revendications 1 à 3, **caractérisé en ce qu'**il comprend un élément de compensation (14, 15), tel qu'une rondelle flexible dans la direction de serrage, agencé entre la partie de bride et la surface opposée de l'élément de serrage.

5. Raccord de conduit selon la revendication 3, **caractérisé en ce que** l'élément d'espacement (13) est agencé conjointement avec un élément de serrage, tel qu'une vis (10).

6. Raccord de conduit selon l'une quelconque des revendications 1 à 5, **caractérisé en ce que** le raccord comprend des moyens (13) pour centrer les sections de conduit (1, 2) à raccorder, au moins au niveau de la jonction, au moins lorsque le raccord est serré.

7. Raccord de conduit selon l'une quelconque des revendications 1 à 6, **caractérisé en ce qu'**au moins l'une des parties de bride (8, 8a, 8b) est dotée de fentes (18), d'ouvertures ou trous équivalents, principalement formés pour améliorer l'adaptabilité.

8. Raccord de conduit selon l'une quelconque des revendications 1 à 7, **caractérisé en ce que** les parties de bride (8, 9) et les moyens de serrage (10, 11, 12) ont été agencés sous la forme d'une garniture complète qui peut être montée directement sur le conduit.

9. Raccord de conduit selon l'une quelconque des revendications 1 à 8, **caractérisé en ce que** les parties de bride (8, 9) sont prévues avec des ouvertures (16, 17) pour les éléments de serrage, tels que par exemple des éléments de vis (10), l'ouverture étant formée du point de vue de la forme ou de la dimension afin de permettre le mouvement, tel que le changement angulaire (α, β), nécessaire pour l'adaptation de la partie de bride lorsque le raccord est serré.

10. Raccord de conduit selon l'une quelconque des revendications 1 à 9, **caractérisé en ce que** les éléments de bride (8, 8', 8" ; 9, 9', 9") agencés côte à côte, sont fixés entre eux par des faces latérales adjacentes avec un adhésif élastique, tel que la silicone.

11. Raccord de conduit selon l'une quelconque des revendications 1 à 10, **caractérisé en ce qu'**une étanchéité plane (5) est agencée entre les sections de conduit (1, 2) à raccorder, un côté de l'étanchéité étant doté d'un adhésif afin de lui permettre d'être fixé facilement sur l'une des sections de conduit, avant l'assemblage.
